Europäisches Patentamt

(19) European Patent Office

Office européen des brevets

(11) Publication number: **0 1 1 7 607**
**B1**

(12) **EUROPEAN PATENT SPECIFICATION**

(45) Date of publication of the patent specification:
**27.08.86**

(51) Int. Cl.⁴: **C 09 D 3/82,** C 08 L 83/04,
C 09 D 3/76, C 08 L 29/04

(21) Application number: **84300206.4**

(22) Date of filing: **13.01.84**

(54) Siloxane-PVA coating compositions.

(30) Priority: **28.01.83 US 461830**

(43) Date of publication of application:
**05.09.84 Bulletin 84/36**

(45) Publication of the grant of the patent:
**27.08.86 Bulletin 86/35**

(84) Designated Contracting States:
**BE DE FR GB NL SE**

(56) References cited:
**EP - A - 0 053 471**
**DE - A - 2 237 551**
**FR - A - 2 482 614**
**GB - A - 908 988**

(73) Proprietor: **DOW CORNING CORPORATION, Midland Michigan 48640 (US)**

(72) Inventor: **Thayer, Leroy Elton, 50 Shirmor Drive Route 6, Midland Michigan 48640 (US)**

(74) Representative: **Lewin, John Harvey et al, Elkington and Fife High Holborn House 52/54 High Holborn, London WC1V 6SH (GB)**

## Description

The present invention relates to adhesive release compositions. More specifically, the present invention relates to siloxane-containing, aqueous emulsion coating compositions which are particularly useful as a tape backsize release coating.

Siloxane-containing coating compositions are widely used as adhesive-releasing coatings because they provide a smooth, low-force release of adhesive substances. Thus, siloxane-containing coating compositions are used, for example, to facilitate the release of asphalt, foods and pressure sensitive adhesives.

However, the adhesive release characteristic of siloxane-containing coating compositions are frequently too good to enable them to be used as a tape backsize. That is, when an adhesive-bearing tape, such as a masking tape, is prepared with a siloxane-containing coating composition on the back side, i.e. the side opposite the adhesive-bearing side, and the tape is rolled in the usual manner, the roll typically lacks dimensional stability and unrolls and/or telescopes out of its roll form. Accordingly, much effort has been expended to increase, in a controlled and/or predictable manner, the adhesive release force of siloxane-containing coatings.

In addition to providing an adhesive release level that is frequently too good for use as a tape backsize, siloxane-containing coating compositions sometimes migrate into the adjacent adhesive and adversely alter its adhesive nature. Accordingly, much effort has also been expended to decrease the tendency of siloxane-containing coating compositions to migrate into an adhesive applied thereto.

Northrup et al., U.S. Patent No. 3,328,482, discloses a composition consisting essentially of 100 parts of certain polydiorganosiloxanes and from 0.5 to 100 parts of a polymeric material consisting essentially of butylene and/or propylene units. The compositions of Northrup et al. are said to have less effective release capabilities than previously known silicone release agents. Selectable adhesive release, by way of a sequence of release compositions, was also disclosed therein. However, the adhesive release forces of these compositions are less than the 250 to 450 grams per inch (97 to 174 N/m) release force that is currently desired for a tape backsize.

Keil, U.S. Patent No. 3,527,659, discloses a solvent-based composition having intermediate release properties and consisting of a dimethylpolysiloxane-based formulation and a silicone resin copolymer of $R_3SiO_{1\cdot2}$ units and $SiO_{4\cdot2}$ units and a hydroxyl content of no more than 0.7 percent. The compositions of Keil have selectable-force adhesive release characteristics; however, they are difficult to prepare in aqueous form due to the solid nature of the silicone resin copolymer.

Mestetsky, U.S. Patent No. 3,770,687, discloses a controlled release coating composition comprising an organic solvent solution of an organopolysiloxane and a polymer of an unsaturated aliphatic dibasic acid or derivative thereof. The compositions of Mestetsky provide small increments of controllable release force in the low-release force range of from 50 to 80 grams per inch (19 to 31 N/m). Mestetsky further discloses comparative solvent-based compositions of the art having higher, but less controlled, release force.

Poly (vinyl alcohol) has also been used as a component in siloxane-containing coating compositions. For example, Benson, U.S. Patent No. 3,463,661, discloses an aqueous coating composition comprising poly (vinyl alcohol) and a commercial silicone release coating; however, the adhesive release force provided by the composition was not disclosed.

Caimi et al., U.S. Patent No. 3,933,702, discloses aqueous emulsion coating compositions which comprise a hydrocolloid-stabilized aqueous emulsion of a film-forming vinyl polymer and from 0.5 to 20 percent of a release-promoting compound selected from certain organo-functional siloxanes. The hydrocolloid preferred by Caimi et al. is poly (vinyl alcohol).

Hoeckemeyer et al., German OLS 2,449,085 relates to adhesive compositions containing a crosslinkable polydiorganosiloxane, a cross-linking agent, a cross-linking catalyst and poly (vinyl alcohol).

The liquid silicone resin component which is used in the compositions and method of this invention has been disclosed by J.D. Blizzard and T.J. Swihart in U.S. Patent No. 4,310,678.

The liquid silicone resin component has been mixed with certain vinyl- and/or hydroxyl-containing polydiorganosiloxane fluids to provide curable silicone compositions, as disclosed by J.D. Blizzard in U.S. Patent No. 4,322,518. The curable silicone compositions of Blizzard are useful for coating a substrate. For example, a paper substrate can be coated to provide a selectable-force adhesive release coating thereon.

While the compositions of Blizzard are useful for providing a selectable-force adhesive release coating, said force is in the premium to moderate force range, i.e., in the range of 20 to 50 N/m. Although a premium to moderate release force is highly desirable, higher release forces are also desired. In particular, for use as a tape backsize, a composition providing a release force of from about 100 to 200 N/m is desired.

It is an object of this invention to provide aqueous coating compositions which are useful as release coatings for pressure sensitive adhesives which are useful as a tape backsize adhesive release coating. It is a further object of the present invention to provide a tape backsize adhesive release coating composition which is substantially free of an adverse effect on the subsequent adhesiveness of the unwound tape.

It is believed that the use of a hydroxyl-endblocked polydimethylsiloxane having a low viscosity, and therefore a high hydroxyl content, in cooperation with poly (vinyl alcohol) and the liquid silicone resin, provides a more structured and more completely cured coating than the siloxane-containing coating composition of the art.

The composition of the present invention comprises an essentially homogeneous mixture of (I) a liquid silicone resin prepared by (A) forming a homogeneous mixture having an acid number greater than zero and consisting essentially of (a) an organic solvent solution of a resinous copolymeric siloxane containing silicon-bonded hydroxyl radicals and consisting essentially of $R_3SiO_{1/2}$ siloxane units and $SiO_{4/2}$ siloxane units wherein the ratio of the number of said $R_3SiO_{1/2}$ siloxane units to the number of said $SiO_{4/2}$ siloxane units has a value of from 0.6/1 to 0.9/1 and each R denotes a methyl radical and (b) a liquid organohydrogenpolysiloxane having the formula $R''R'_2SiO(RHSiO)_bSiR'_2R''$ wherein $R''$ denotes H or $R'$; $R'$ denotes a monovalent hydrocarbon radical, R denotes a methyl radical and b has an average value of from 30 to 70, and (B) heating the homogeneous mixture of (A) to remove substantially all of said organic solvent therefrom, (II) a hydroxyl-endblocked polydimethylsiloxane having a viscosity of less than 0.1 pascal-seconds at 25°C, (III) poly(vinyl alcohol), and (IV) water in at least a suficient amount to render the composition homogeneous; the weight ratio of the amount of component (I) to the amount of component (II) having a value of from 5/95 to 95/5 and the weight ratio of the total amount of component (I) plus component (II) to the amount of component (III) having a value of from 1/9 to 9/1.

Component (I) of the compositions of this invention is designated herein as a liquid silicone resin and is disclosed in U.S. Patent No. 4,310,678. It is prepared by reacting a first reactant (a), designated herein as a resinous copolymeric siloxane, with a second reactant (b), designated herein as a liquid organohydrogenpolysiloxane.

Component (a) that is used to prepare the liquid silicone resin (I) is an organic solvent solution of a resinous copolymeric siloxane which consists essentially of $R_3SiO_{1/2}$ siloxane units and $SiO_{4/2}$ siloxane units. The resinous copolymeric siloxane has a complex, as-yet-undetermined structure; however, for the purposes of this disclosure it is fully characterized by the ratio of said siloxane units therein, by its silanol, i.e. silicon-bonded hydroxyl, content and by its solubility in organic solvents, such as benzene.

The resinous copolymeric siloxane portion of component (a) consists of from 0.6 to 0.9 $R_3SiO_{1/2}$ units for every $SiO_{4/2}$ unit. Each R denotes a methyl radical; however, it is within the scope and spirit of the present invention that a minor portion of the methyl radicals can be replaced with other monovalent hydrocarbon radicals, such as the $R'$ radicals hereinbelow delineated, as long as the compositions of this invention are not adversely affected with respect to its intended use as a tape backsize composition. The resinous copolymeric siloxane portion further comprises from 0.1 to 5 percent by weight of silicon-bonded hydroxyl radicals and frequently comprises trace amounts of silicon-bonded alkoxy radicals such as methoxy, ethoxy or isopropoxy radicals which arise from the particular method that is used to prepare said resinous copolymeric siloxane.

In a preferred component (I) of the composition of this invention, the resinous copolymeric siloxane portion of component (a) consists essentially of $(CH_3)_3SiO_{1/2}$ siloxane units and $SiO_{4/2}$ siloxane units, in the number ratio stated above, and has a silicon-bonded hydroxyl content of from 1 to 5 percent by weight.

Resinous copolymeric siloxanes consisting of $R_3SiO_{1/2}$ units and $SiO_{4/2}$ units are well known in the art and are described by Daudt et al., U.S. Patent No. 2,676,182, and by Goodwin, U.S. Patent No. 2,857,356, which teach how to prepare resinous copolymeric siloxanes which are suitable for preparing component (I) of the compositions of this invention. Briefly, an aqueous solution of sodium silicate (e.g. No. 9 sodium silicate sold by DuPont) is acidified to the proper pH by adding it to a mixture of hydrochloric acid and isopropanol and the resulting acidic silica hydrosol is then treated with a source of $R_3SiO_{1/2}$ siloxane units, such as $R_3SiOCH_3$, $R_3SiCl$ or $R_3SiOSiR_3$, dissolved in a mixture of isopropanol and xylene. After being heated the reaction mixture is cooled and is separated into an aqueous phase, which is discarded, and a non-aqueous phase comprising the resinous copolymeric siloxane, which is further washed with water to reduce its acid number and to remove water-soluble components, such as isopropyl alcohol. Preferably, the acidic resinous copolymeric siloxanes which are prepared by these methods are washed with water to remove most, but not all, of the acid therein. For example, resinous copolymeric siloxanes which have been prepared by the method of Daudt et al. typically have sufficient acid remaining therein to provide an acid number of from 0.2 to 2.0, as measured by the method hereinafter disclosed, based on the amount of solvent-free resinous copolymeric siloxane. These materials are preferred for the purposes of this invention.

Resinous copolymeric siloxanes are typically prepared in an organic solvent which can conveniently serve as the organic solvent portion of component (a). Alternatively, the resinous copolymeric siloxcane can be prepared in one organic solvent and subsequently can be transferred to a second organic solvent, if desired, to form component (a). If the resinous copolymeric siloxane does not contain any organic solvent, one or more organic solvents should be mixed therewith before or during the preparation of the homogeneous mixture of (a) and (b).

The particular organic solvent portion of component (a) is not critical and can be, for example, an aliphatic hydrocarbon, an aromatic hydrocarbon or halogenated derivatives of either or mixtures thereof. Preferably, the organic solvent is one that forms an azeotrope with water so that any water that is formed during the subsequent heating step, detailed below, can be conveniently removed by azeotropic distillation. Particularly useful organic solvents include benzene, toluene, xylene, trichloroethylene and mineral spirits.

The amount of resinous copolymeric siloxane contained in component (a) is not critical and can range from 10 to 90 percent by weight. It is preferred that only as much organic solvent as is needed to prepare a homogeneous mixture of resinous copolymeric siloxane and liquid organohydrogenpolysiloxane be used in order to minimize the amount of time and/or energy needed to subsequently remove it from the mixture as described hereinafter. A preferred component (a) contains approximately 60 to 70 percent by weight resinous copolymeric siloxane and the balance solvent.

Component (b) that is used to prepare the liquid silicone resin component (I) is a liquid organo-hydrogenpolysiloxane having the formula $R''R'_2$-$SiO(RHSiO)_bSiR'_2R''$. $R''$ denotes a hydrogen atom or a $R'$ radical and each $R$ denotes a methyl radical. $R'$ denotes a monovalent hydrocarbon radical; such as an alkyl radical, such as methyl, ethyl, propyl and isobutyl; an aryl radical, such as phenyl, tolyl and xylyl; an arylaklyl radical, such as beta-phenylethyl and beta-phenylpropyl; a cycloaliphatic radical, such as cyclohexyl; and an alkenyl radical, such as vinyl and allyl. An organohydrogenpolysiloxane having the formula $(CH_3)_3SiO[(CH_3)(H)SiO]_bSi(CH_3)_3$ wherein $b$ has an average value of from 30 to 70 is a highly preferred component (b) for the purposes of this invention.

Liquid organohydrogenpolysiloxane (b) can have any viscosity; however, it preferably has a viscosity of less than 1 pascal-second at 25°C when used in amounts of less than 60 parts by weight for every 40 parts by weight of resinous copolymeric siloxane.

Organohydrogenpolysiloxanes and their preparation are well known in the organosilicon polymer art; some are commercially available. Briefly, the preparation of organohydrogenpolysiloxanes can be accomplished, for example, by hydrolyzing a suitable mixture of hydrolyzable silanes, such as chlorosilanes, and equilibrating the resulting hydrolyzate under acid catalysis. Alternatively, a mixture of suitable siloxanes, such as cyclic siloxanes and linear siloxanes, can be copolymerized and equilibrated under acid catalysis.

In the preparation of component (I), the amounts of resinous copolymeric siloxane and liquid organohydrogenpolysiloxane that are mixed may vary widely. Generally, the viscosity of the liquid silicone resin that is produced varies directly with the viscosity of the organohydrogenpolysiloxane and inversely with its relative amount in the homogeneous mixture of components (a) and (b). Liquid silicone resins can be obtained when as little as about 10 percent by weight of organohydrogenpolysiloxane is used, based on the weight of resinous copolymeric siloxane plus organohydrogenpolysiloxane.

For the purposes of this invention, a highly preferred liquid silicone resin component is obtained when the homogeneous mixture that is heated comprises from 40 to 60, preferably 50, parts by weight of resinous copolymeric siloxane consisting of $(CH_3)_3$-$SiO_{1/2}$ units and $SiO_{4/2}$ units and containing from 1 to 5 percent by weight of silicon-bonded hydroxyl radicals and from 40 to 60, preferably 50, parts by weight of organohydrogenpolysiloxane having the formula $(CH_3)_3SiO[(CH_3)(H)SiO]_{30}$ to $_{70}Si(CH_3)_3$.

In the preparation of component (I), a homogeneous mixture is formed by thoroughly mixing the desired amounts of component (a) and component (b) and, if necessary, an acid, preferably a strong acid such as hydrochloric acid, to provide an acid number greater than zero therefor. Preferably, the acid number of the homogeneous mixture, extrapolated to zero solvent content, has a value of from 0.1 to 1. Preferably, component (a) is sufficiently acidic, as prepared, to provide this acidity for the homogeneous mixture.

The resulting homogeneous mixture of (a) plus (b) is immediately or subsequently heated to volatilize the organic solvent therefrom. Said heating is preferably initially done at atmospheric pressure and is then continued at reduced pressure to accelerate the removal of said solvent.

In a preferred embodiment of this invention, the homogeneous mixture of (a) plus (b) is heated to about 150°C at atmospheric pressure and is then subjected to a gradually decreasing pressure, without an increase in temperature, to remove substantially all of the organic solvent therefrom. By substantially, it is meant herein that the liquid silicone resin contains less than about 5 percent, and preferably less than about 1 percent, by weight organic solvent.

Alternatively, the homogeneous mixture of (a) plus (b) can be partially devolatilized at room temperature, such as by evaporation, and the partially devolatilized mixture then heated to remove substantially all of the organic solvent therefrom.

The liquid silicone resin (I) contains silicon-bonded hydroxyl radicals and silicon-bonded hydrogen atoms which provide chemical reactivity therefor in the compositions of this invention. The amount of silicon-bonded hydrogen atoms and silicon-bonded hydroxyl radicals therein depends upon the ratio of said radicals in, and the acid number of, the homogeneous mixture of (a) plus (b) that is used for its preparation.

The assure that the liquid silicone resin contains silicon-bonded hydroxyl radicals for subsequent reaction with e.g. silicon-bonded hydroxyl or hydrogen radicals, it is believed that the acid number of the homogeneous mixture that is heated should have a value of less than about 2.

Component (II) of the composition of this invention is a hydroxyl-endblocked polydimethylsiloxane hav-ing the formula $HO[(CH_3)_2SiO]_aH$ wherein $a$ has a value such that the viscosity of the polydimethylsiloxane does not exceed 100 centipoise (0.1 pascal-seconds) at 25°C. Thus, $a$ will typically have a value of less than about 55 and a hydroxyl content of at least 0.8 percent by weight. Preferably, $a$ has a value of about 35, thereby providing a hydroxyl content of about 1.3 percent by weight and a viscosity of about 65 centipoise (65 millipascal-seconds) for the polydimethylsiloxane.

Low-viscosity, hydroxyl-endblocked polydimethylsiloxanes are well-known materials in the silicone art and need no further delineation herein. They are readily prepared, for example, by hydrolyzing dimethyldichlorosilane in excess water, followed by a washing operation to remove acid.

Component (III) of the compositions of this invention is poly(vinyl alcohol). Poly(vinyl alcohol) is typically described in the polymer art as partially hydrolyzed (having about 12 percent unhydrolyzed vinyl acetate groups), fully hydrolyzed (having about 2 percent unhydrolyzed vinyl acetate groups) or super hydrolyzed (having less than 0.5 percent unhydrolyzed vinyl acetate groups). For the purposes of this invention, component (III) is preferably partially hydrolyzed poly(vinyl alcohol) although the fully hydrolyzed and super hydrolyzed versions are also suitable. In order to prepare low viscosity compositions of this invention having a high level of poly(vinyl alcohol), it is preferred that the poly(vinyl alcohol) have a viscosity of about 5 centipoise (5 millipascal-seconds) at 25°C, when measured as a 4 percent by weight solution in water.

The amount of water [component (IV)] that is used in the compositions of this invention is merely that amount that will provide a homogeneous mixture of silicon-containing components and poly(vinyl alcohol) component. Within this restriction, the amount of water is not critical and can be selected to establish the solids content, i.e. the concentration of non-volatile components, as desired.

Although not being required, when one or more surfactants are used to prepare the aqueous emulsion compositions of this invention their identity and amount can be selected by following well-known principles that are used in the emulsification of water-insoluble components, as a dispersed phase, in water, as a continuous phase.

The relative amounts of liquid silicone resin, hydroxyl-endblocked polydimethylsiloxane and poly(vinyl alcohol) that are present in the compositions of this invention may vary widely, depending upon the desired release properties of the composition obtained therefrom.

A range of from 5 parts by weight of component (I) or (II) for every 95 parts by weight of component (II) or (I), respectively, is contemplated by this invention. Surprisingly, these mixtures of components (I) and (II) provide a lower release force for masking tape than either component used singly. Compositions of this invention having a weight ratio of liquid silicone resin to hydroxyl-endblocked polydimethylsiloxane of from 20/80 to 10/90 are particularly useful as a tape backsize formulation because they provide a release force for masking tape in the highly preferred range of from 250 to 350 grams per inch (97 to 135 N/m) when measured by the 20/70° Test, hereinbelow described.

A range of from 1 to 9 parts by weight of silicon-containing components, i.e. (I) plus (II), for every 9 to 1 parts by weight, respectively, of poly(vinyl alcohol) in the compositions of this invention is contemplated; however, from a cost aspect, in a highly preferred embodiment of this invention the ratio of the silicon-containing components to the poly(vinyl alcohol) has a value of about 1 or less.

The aqueous emulsion compositions of this invention can be prepared by well-known emulsifying procedures. For example, the liquid silicone resin and the hydroxyl-endblocked polydimethylsiloxane can be mixed in the desired amounts and the resulting mixture then emulsified in an aqueous solution of the desired amount of poly(vinyl alcohol). Alternatively, the liquid silicone resin and the hydroxyl-endblocked polydimethylsiloxane can be separately emulsified in aqueous poly(vinyl alcohol) and the resulting emulsions blended in the proper ratios to provide the desired compositions of this invention. Alternatively, the liquid silicone resin and the hydroxyl-endblocked polydimethylsiloxane, either mixed together or in separate portions, can be emulsified in water containing a less-than-completive portion of poly(vinyl alcohol) and the resulting emulsion(s) further mixed with a completive portion of aqueous poly(vinyl alcohol). Furthermore, the compositions of this invention can be diluted with water or aqueous poly(vinyl alcohol) to prepare other compositions of this invention.

When preparing the emulsion compositions of this invention, any shear means may be used which is capable of producing an emulsion having a particle size of less than 10 micrometers, preferably less than 1 micrometer. A particularly useful shear means is a colloid mill. Emulsion compositions, either of this invention or of the components used in this invention, which have the stated particle size can then be further diluted or blended and optionally diluted, respectively, using low shear means, such as stirring.

Although the compositions of this invention are useful as heat-cured coating compositions of general utility, said compositions preferably further contain a curing catalyst, hereinbelow delineated, in an amount sufficient to increase the curing rate of the compositions. An increased curing rate is characterized by a greater degree of curing at a particular combination of curing temperature and curing time or by a decreased curing temperature and/or a decreased curing time that is needed to produce a given degree of cure.

When the compositions of this invention are used as a tape backsize release coating, it is preferred that the compositions be fully cured when exposed to a relatively low temperature, such as about 300°F (148°C), for a brief period of time, such as less than about 60 seconds. By «a greater degree of curing» and by «fully cured» it is meant that the subsequent adhesion, as measured by the 20/70° Test hereinafter described, is larger, and greater than 90%, and preferably greater than 95%, respectively.

When a curing catalyst is mixed with the compositions of this invention, a curing reaction typically begins, even at room temperature. Therefore, if used, a curing catalyst is preferably mixed with the composition to be used as a coating composition shortly before, and preferably no sooner than 6 hours before, it is to be applied as a coating.

The homogeneous compositions of this invention are useful as coating compositions to provide a substrate, coated therewith, with an adhesive-releasing film. Thus, the present invention has, as a second aspect, a method for coating a substrate.

In said second aspect the present invention relates to a method for coating a substrate, said method comprising (1) applying to said substrate a composition consisting essentially of a homogeneous mixture of (I) a liquid silicone resin prepared by (A) forming a homogeneous mixture having an acid number greater than zero and consisting essentially of (a) an organic solvent solution of a resinous copolymeric siloxane containing silicon-bonded hydroxyl radicals and consisting essentially of $R_3SiO_{1/2}$ siloxane units and $SiO_{4/2}$ siloxane units wherein the ratio of the number of said $R_3SiO_{1/2}$ siloxane units to the number of said $SiO_{4/2}$ siloxane units has a value of from 0.6/l to 0.9/l and each R

denotes a methyl radical and (b) a liquid organohydrogenpolysiloxane having the formula $R''R'_2$-$SiO(RHSiO)_bSiR'_2R''$ wherein $R''$ denotes H or $R'$, $R'$ denotes a monovalent hydrocarbon radical, R denotes a methyl radical and b has an average value of from 30 to 70, and (B) heating the homogeneous mixture of (A) to remove substantially all of said organic solvent therefrom, (II) a hydroxyl-endblocked polydimethylsiloxane having a viscosity of less than 0.1 pascal-seconds at 25°C, (III) poly-(vinyl alcohol), (IV) water in at least a sufficient amount to render the composition homogeneous; the weight ratio of the amount of component (I) to the amount of component (II) having a value of from 5/95 to 95/5 and the weight ratio of the total amount of component (I) plus component (II) to the amount of component (III) having a value of from 1/9 to 9/1 and, optionally, (V) a curing catalyst in sufficient amount to improve the curing rate of the coating and (2) evaporating the water from the applied composition.

In this method for coating a substrate with a coating composition, the coating composition used therein, including the preferred coating compositions used therein, are as delineated above for the compositions of this invention.

As noted above, the coating compositions that are used in the coating method of this invention preferably, although not necessarily, further comprise a curing catalyst for the composition.

One class of suitable curing catalysts is the silanol-condensing catalysts which are well known in the silicone coatings art. Examples of silanol-condensing catalysts include the organic acid salts of lead, tin and iron, such as iron octoate, lead octoate and stannous octoate and the dialkyldiacylate compounds of tin, such as dibutyltin dilaurate, dioctyltin dilaurate and dibutyltin diacetate.

Another class of suitable curing catalysts is the hydrosilylation catalysts, such as compounds of platinum or rhodium, which are well known in the silicone coating art.

The amount of curing catalyst to be used is merely that amount that will improve the curing rate of the applied coating composition. Typically the amount of silanolcondensing curing catalyst that is used to cure the compositions of this invention ranges from 5 to 25, preferably 10 to 20, percent by weight, based on the total weight of the silicon-containing components in the composition. Hydrosilylation catalysts are typically used in much lower concentrations, such as 1 to 100 parts per million parts of silicon-containing components.

The coating compositions of this invention are typically applied to a substrate as a thin film, using any suitable application method, such as spraying, dipping, spreading brushing, offset coating or rolling. The thickness of the applied film is not critical, it being limited only by the requirement that the water be removable therefrom. Typically the coating composition is applied as a film having a thickness of from 20 to 2000, preferably from 50 to 250, micrometers.

After the coating composition has been applied the water is allowed, or forced by heating, to volatilize, thereby providing a solid coating on the substrate. If desired, the resulting coating can be heated to further improve the extent of cure of the solid coating. For example, after the water has been allowed to substantially completely evaporate therefrom the coating can be heated to a temperature short of the degradation temperature of the substrate and its coating for a sufficient length of time to improve the degree of cure of the coating.

The compositions of this invention can be applied to any substrate; such as a metal substrate, such as aluminum, iron and steel; a siliceous substrate, such as glass, concrete, brick, mortar, clay or ceramic; a polymeric substrate, such as polyamide, polyester, polyolefin or polycarbonate; and a cellulosic substrate, such as paper, cardboard or wood.

The method of this invention is particularly useful for coating a paper substrate to provide adhesive-releasing characteristics for the paper. For this use, it is preferred to apply a very small amount of releasing composition to the paper. A typical amount would be from 0.5 to 1 pound of composition, based on solids, per ream of paper (0.8 to 1.6 g/m$^2$).

In a typical method a composition of this invention containing, for example, 50 percent by weight water and no curing catalyst is diluted to at least 90 percent by weight water and is thereafter mixed with a curing catalyst just prior to its use as a treating bath to coat a paper substrate.

The following examples are disclosed to further illustrate, but not to limit, the present invention. All parts and percentages are by weight unless otherwise stated.

The non-volatile content of a material, also denoted herein as solids or N.V.C., was either calculated from amounts of components used or measured by placing 1.50 grams of the material in an aluminum foil dish, 60 mm in diameter and 15 mm deep, and heating the sample for 1 hour at 150°C. in an air-circulating oven. The heated sample was then cooled to room temperature and reweighed to determine the weight of the non-volatile material (w). N.V.C., in percent, is equal to 100 w/1.50.

The acid number of a material, also denoted herein as A.N., was determined by titrating 1.00 gram of the material to a bromcresol purple endpoint, using alcoholic KOH, and is equal to the number of mg of KOH so used.

The viscosity of a material was measured at 25°C. with a Brookfield® viscometer, Model RVF, and the value so obtained was converted from centipoise to pascal-seconds (Pa·s) for this disclosure by multiplying by 0.001.

Herein the abbreviation PVA denotes poly(vinyl alcohol).

Masking tape release from an adhesive release composition and the subsequent adhesion of the released masking tape was measured by two methods.

In one method, herein designated as the 1/RT Test, a piece of 3M® #232 Masking Tape (Minnesota Mining and Mfg. Co.; St. Paul, MN) was adhered to the release coating to be tested using a 4.5 pound (approximately 2 kg) roller. After a waiting period of one hour at room temperature under a pressure of 0.25 p.s.i. (1724 Pa), the tape was removed from the release coating (release force sometimes measured) and the thus-removed tape was immediately applied to a clean, stainless steel panel using the 4.5 pound roller. The tape was then immediately removed from the stainless steel panel (release force always measured). The force required to remove the tape from the stainless steel panel is designated herein as subsequent adhesion (SA) and is expressed as a percentage of the force that was required to remove an unused piece of the tape, identically applied to the stainless steel panel.

In a second method, herein designated as the 20/70° Test the method was the same as the 1/RT Test except that the masking tape which was applied to the release coating to be tested was aged at 70°C for 20 hours instead of one hour at room temperature before it was removed from the release coating.

The value of subsequent adhesion is a measure of the degree of cure of the release coating and is preferably greater than 90 percent, most preferably greater than 95%. The force needed to remove the tape from the release coating preferably has a value of from 100 to 200 N/m for masking tape preparation.

### Examples 1 to 5

Twenty parts of PVA (Gevatol® 20-30, Monsanto Co., St. Louis, MO) having a viscosity, at 4% solids in water, of 5 mPa·s and approximately 12 percent unhydrolyzed vinyl acetate groups was slowly stirred into 60 parts of water. The mixture was stirred at 65° to 70°C for 2 hours and was then cooled to 30°C. Twenty parts of a hydroxyl-endblocked polydimethylsiloxane fluid having a viscosity of 70 mPa·s and a hydroxyl content of 1.5% was stirred into the aqueous PVA for 30 minutes to form a pre-emulsion which was then passed once through a colloid mill set at 15 mils to provide a silicone fluid emulsion.

The above-described process was repeated except that 20 parts of a liquid silicone resin was used in place of the hydroxyl-endblocked polydimethylsiloxane fluid to provide a liquid silicone resin emulsion.

The liquid silicone resin was prepared by mixing 50 parts of an organohydrogenpolysiloxane fluid having the formula $(CH_3)_3SiO[(CH_3)(H)SiO]_{35}Si(CH_3)_3$, N.V.C. = 100%, A.N. = 0.02, SiH = 1.71% and a viscosity of 30 mPa·s with 71.4 parts of a 70% solids xylene solution of a resinous copolymeric siloxane, (50 parts of resinous copolymeric siloxane). The resinous copolymeric siloxane was prepared from 45 parts of sodium silicate (41.6°Be) and 20 parts of $(CH_3)_3SiCl$ according to the method of Daudt et al., U.S. Patent No. 2,676,189, and contained $(CH_3)_3SiO_{1/2}$ siloxane units and $SiO_{4/2}$ siloxane units in a mol ratio of approximately 0.75/1.0 and had A.N. = 0.80, SiOH = 2.56%, SiH = 0% and N.V.C. = 70%. By extrapolation to 100% N.V.C., the resinous copolymeric siloxane itself had A.N. = 1.14, SiH = 0% and SiOH = 3.66%.

The mixture of organohydrogenpolysiloxane fluid and resinous copolymeric siloxane solution was heated to a temperature of 150°C at atmospheric pressure, after which the pressure was reduced to volatilize xylene and water. After the cessation of water-evolution, the mixture was heated at a temperature of 150°C and at a pressure of approximately 2 Torr (267 Pa) to remove substantially all of the remaining xylene. The resulting liquid silicone resin had the following properties: Viscosity = 1900 mPa·s, N.V.C. = 98.6%, SiH = 0.73%, SiOH = 1.2% and specific gravity = 1.1.

The above-described emulsions were blended, in various ratios, to provide five compositions of this invention, each having a silicone/PVA ratio equal to 1/1. These compositions were diluted with water to 5% solids, and were catalyzed with 2.5%, solids based on solids, of a 20% aqueous emulsion of dibutyltin dilaurate. The catalyzed coating compositions were coated onto S2S kraft using a No. 12 Mayer Rod and were heated at 300°F (149°C) for 45 seconds to dry and cure the coating.

The resulting release coatings were tested by the above described tests for release and subsequent adhesion. The results, summarized in the Table as 1 to 5, show that various release levels are available from the various compositions of this invention and the release levels vary directly with the ratio of liquid silicone resin to polydimethylsiloxane fluid in the composition. Although the 20/70° Test (S.A.%) showed that these compositions were fully cured after the aging test the more sensitive 1/RT Test (S.A.%) showed that only the compositions of Examples 2 and 3 were cured to the preferred extent by the 300°F/45 second heating operation.

### Examples 6 to 9

The procedure of Examples 1 to 5 was repeated except that 4 compositions of this invention were prepared which, along with the silicone fluid emulsion and the liquid silicone resin emulsion, were diluted to 10% solids and were catalyzed with 5%, solids based on solids, of a 50% aqueous emulsion of dioctyltin dilaurate.

The results, shown in the Table as 6 to 9 and Comparison i and ii, further illustrate the various release levels that are available from the compositions of this invention. Notable is the lower release levels provided for masking tape by the compositions of this invention, compared to either the liquid silicone resin emulsion or the silicone fluid emulsion used singly.

### Examples 10 to 13

These examples illustrate the effect of catalyst concentration on the release and subsequent adhesion characteristics of a composition of this invention.

Three parts of the liquid silicone resin and 17 parts of the hydroxyl-endblocked polydimethylsiloxane that are described in Example 1 to 5 were mixed and the resulting mixture was stirred into 80 parts of the aqueous PVA that was used to prepare the emulsion of Examples 1 to 5, to form a pre-emulsion. This pre-emulsion was then passed once through a colloid mill set at 10 mils and the resulting emulsion was diluted with water to 7.5% solids to provide a composition of this invention having a silicone/PVA ratio of 1/1 and a polydimethylsiloxane/liquid silicone resin ratio of 85/15.

Four portions of this composition were catalyzed as follows:

Examples 10 and 11 were catalyzed with 5% and 10%, respectively, solids based on solids with a 20% aqueous emulsion of dibutyltin dulaurate. Examples 12 and 13 were catalyzed with 7.5% and 15%, respectively, solids based on solids, with a 50% aqueous emulsion of dioctyltin dilaurate.

The resulting four formulations were coated onto Nashua® tape substrate (Nashua Corp.; Nashua, NH) with a No. 6 Mayer Rod, were heated at 300°F for 45 seconds and were tested for release and subsequent adhesion. The results, shown in the Table as 10 to 13, show that release force can be decreased and subsequent adhesion can be increased by increasing the catalyst concentration in the coating composition.

*Example 14*

Equal portions of the hydroxyl-endblocked polydimethylsiloxane fluid and the liquid silicone resin that are described in Examples 1 to 5 were mixed and 30 parts of the resulting mixture was mixed with 40 parts of the aqueous PVA that was used to prepare the emulsions that are described in Examples 1 to 5, to provide a pre-emulsion. This pre-emulsion was passed once through a colloid mill set at 15 mils and the resulting emulsion was diluted with 30 parts of water to provide a composition of this invention having a silicone/PVA ratio of 3/1 and a polydimethylsiloxane/liquid silicone resin ratio of 50/50.

When this composition was diluted, catalyzed, coated on to S2S kraft as described in Examples 1 to 5 and tested according to the 20/70° Test a release value of 148 N/m and a subsequent adhesion of 96% were obtained. These results (Table), when compared to the results of Example 2, show that the release value of a composition can be increased by decreasing the silicone/PVA ratio in the composition.

For Comparison iii 60 parts of the above-described mixture of polydimethylsiloxane fluid and liquid silicone resin was emulsified into 37.5 parts of water containing 2.5 parts of sodium laurylsulfate solution, Duponol® WAQE (E.I. DuPont Co.; Wilmington, DE) and the resulting emulsion was diluted with water to 5% solids and was catalyzed with 20%, solids based on solids, of a 50% aqueous emulsion of dioctyltin dilaurate. When coated, heated and tested as noted for Example 14 a very low release value (Table) was obtained.

*Table*

| Example | Composition, Component, Parts | | | | 1/RT Test | 20/70° Test | |
| | I | II | III | IV | S.A., % | Release, N/m | S.A., % |
|---|---|---|---|---|---|---|---|
| 1 | 5 | 15 | 20 | 60 | 86 | 196 | 108 |
| 2 | 10 | 10 | 20 | 60 | 90 | 177 | 104 |
| 3 | 15 | 5 | 20 | 60 | 94 | 142 | 100 |
| 4 | 16 | 4 | 20 | 60 | 86 | — | — |
| 5 | 18 | 2 | 20 | 60 | 84 | — | — |
| Comparison i | 0 | 20 | 20 | 60 | 82 | 203 | 100 |
| 6 | 10 | 10 | 20 | 60 | 84 | 158 | 106 |
| 7 | 14 | 6 | 20 | 60 | 82 | 151 | 100 |
| 8 | 15 | 5 | 20 | 60 | 84 | 132 | 102 |
| 9 | 16 | 4 | 20 | 60 | 85 | 106 | 104 |
| Comparison ii | 20 | 0 | 20 | 60 | 63 | 196 | 89 |
| 10 | 17 | 3 | 20 | 60 | 86 | 90 | 91 |
| 11 | 17 | 3 | 20 | 60 | 107 | 68 | 102 |
| 12 | 17 | 3 | 20 | 60 | 89 | — | — |
| 13 | 17 | 3 | 20 | 60 | 107 | — | — |
| 14 | 15 | 15 | 10 | 60 | — | 148 | 96 |
| Comparison iii | 30 | 30 | 0 | 40 | — | 37 | 135 |

**Claims**

1. A tape back-size composition characterized by containing a homogeneous mixture of

(I) a liquid silicone resin prepared by

(A) forming a homogeneous mixture having an acid number greater than zero and consisting essentially of

(a) an organic solvent solution of a resinous copolymeric siloxane containing silicon-bonded hydroxyl radicals and consisting essentially of $R_3SiO_{1·2}$ siloxane units and $SiO_{4/2}$ siloxane units wherein the ratio of the number of said $R_3SiO_{1·2}$ siloxane units to the number of said $SiO_{4/2}$ siloxane

units has a value of from 0.6/1 to 0.9/1 and each R denotes a methyl radical and

(b) a liquid organohydrogenpolysiloxane having the formula $R''R'_2SiO(RHSiO)_bSiR'_2R''$ wherein $R''$ denotes H or R', R' denotes a monovalent hydrocarbon radical, R denotes a methyl radical and b has an average value of from 30 to 70,

(B) heating the homogeneous mixture of (A) to remove substantially all of said organic solvent therefrom, and further consisting of

(II) a hydroxyl-endblocked polydimethylsiloxane having a viscosity of less than 0.1 pascal-seconds at 25°C,

(III) poly(vinyl alcohol), and

(IV) water in at least a sufficient amount to render the composition homogeneous; the weight ratio of the amount of component (I) to the amount of component (II) having a value of from 5/95 to 95/5 and the weight ratio of the total amount of component (I) plus component (II) to the amount of component (III) having a value of from 1/9 to 9/1.

2. A composition according to claim 1 wherein the (b) liquid organohydrogenpolysiloxane has the formula $(CH_3)_3SiO[(CH_3)(H)SiO]_bSi(CH_3)_3$ wherein b has an average value of from 30 to 70 and the weight ratio of resinous copolymeric siloxane to liquid organohydrogenpolysiloxane has a value of from 40/60 to 60/40.

3. A composition according to claim 2 wherein the (III) poly(vinyl alcohol) is partially hydrolyzed and has a viscosity, at 4 percent by weight in water, of about 5 millipascal-seconds at 25°C.

4. A composition according to claim 3 wherein the weight ratio of (I) liquid silicone resin plus (II) hydroxyl-endblocked polydimethylsiloxane to (III) poly(vinyl alcohol) has a value of about 1 or less.

5. A composition according to claim 4 wherein the weight ratio of (I) liquid silicone resin to (II) hydroxyl-endblocked polydimethylsiloxane has a value of from about 20/80 to about 10/90.

6. A composition obtained by mixing a cure rate-improving amount of a curing catalyst with the composition of claim 5.

7. A composition according to claim 6 wherein the curing catalyst is a silanol-condensing catalyst.

8. A composition according to claim 7 wherein the silanol-condensing catalyst is a dialkyldiacylate compound of tin.

9. A method for coating a substrate, said method comprising

(1) applying to said substrate a composition consisting essentially of

(I) a liquid silicone resin prepared by

(A) forming a homogeneous mixture having an acid number greater than zero and consisting essentially of

(a) an organic solvent solution of a resinous copolymeric siloxane containing silicon-bonded hydroxyl radicals and consisting essentially of $R_3SiO_{1/2}$ siloxane units and $SiO_{4/2}$ siloxane units wherein the ratio of the number of said $R_3SiO_{1/2}$ siloxane units to the number of said $SiO_{4/2}$ siloxane units has a value of from 0.6/1 to 0.9/1 and each R denotes a methyl radical and

(b) a liquid organohydrogenpolysiloxane having the formula $R''R'_2SiO(RHSiO)_bSiR'_2R''$ wherein R'' denotes H or R', R' denotes a monovalent hydrocarbon radical, R denotes a methyl radical and b has an average value of from 30 to 70, and

(B) heating the homogeneous mixture of (A) to remove substantially all of said organic solvent therefrom, (II) a hydroxyl-endblocked polydimethylsiloxane having a viscosity of less than 0.1 pascal-seconds at 25°C,

(III) poly(vinyl alcohol),

(IV) water in at least a sufficient amount to render the composition homogeneous; the weight ratio of the amount of component (I) to the amount of component (II) having a value of from 5/95 to 95/5 and the weight ratio of the total amount of component (I) plus component (II) to the amount of component (III) having a value of from 1/9 to 9/1, and optionally,

(V) a curing catalyst in sufficient amount to improve the curing rate of the coating, and

(2) evaporating the water from the applied composition.

10. A method according to claim 9 wherein the evaporating is accomplished at an elevated temperature.


**Patentansprüche**

1. Beschichtungszusammensetzung für Rückseiten von Bändern, dadurch gekennzeichnet, dass sie eine homogene Mischung enthält von

(I) einem flüssigen Silikonharz, hergestellt durch

(A) Bilden einer eine Säurezahl grösser als 0 aufweisenden homogenen Mischung, bestehend im wesentlichen aus

(a) einer Lösung eines harzartigen Siloxanpolymer, enthaltend an Silicium gebundene Hydroxylgruppen und bestehend im wesentlichen aus $R_3SiO_{1/2}$-Siloxaneinheiten und $SiO_{4/2}$-Siloxaneinheiten, wobei das Zahlenverhältnis der $R_3SiO_{1/2}$-Siloxaneinheiten zu den $SiO_{4/2}$-Siloxaneinheiten einen Wert von 0,6/1 bis 0,9/1 aufweist und R eine Methylgruppe bedeutet, in einem organischen Lösungsmittel und

(b) einem flüssigen Organohydrogenpolysiloxan der Formel $R''R'_2SiO(RHSiO)_bSiR'_2R''$, in der R'' Wasserstoff oder R' ist, R' ein einwertiger Kohlenwasserstoffrest ist, R eine Methylgruppe ist und b einen Mittelwert von 30 bis 70 hat,

(B) Erwärmen der homogenen Mischung von (A) um im wesentlichen das gesamte organische Lösungsmittel zu entfernen, und weiterhin bestehend aus

(II) einem Hydroxyl-endblockierten Polydimethylsiloxan mit einer Viskosität von kleiner als 0,1 Pa s bei 25°C,

(III) Polyvinylalkohol und

(IV) Wasser in mindestens ausreichender Menge, um die Zusammensetzung homogen zu machen, wobei das Gewichtsverhältnis der Menge des Bestandteils (I) zur Menge des Bestandteils (II) einen Wert von 5/95 bis 95/5 aufweist und das Gewichtsverhältnis der Gesamtmenge der Komponenten (I) und (II) zur Menge der Komponente (III) einen Wert von 1/9 bis 9/1 aufweist.

2. Zusammensetzung nach Anspruch 1, dadurch gekennzeichnet, dass das flüssige Organohydrogenpolysiloxan von (b) die Formel $(CH_3)_3SiO[(CH_3)(H)SiO]_bSi(CH_3)_3$ hat, in der b einen Mittelwert von 30 bis 70 hat und das Gewichtsverhältnis harzartigem Siloxancopolymer zu flüssigem Organohydrogenpolysiloxan einen Wert von 40/60 bis 60/40 aufweist.

3. Zusammensetzung nach Anspruch 2, dadurch gekennzeichnet, dass der Polyvinylalkohol von (III) teilweise hydrolisiert ist und in 4 Gew.-%iger wässriger Lösung bei 25°C eine Viskosität von etwa 5 mPa.s aufweist.

4. Zusammensetzung nach Anspruch 3, dadurch gekennzeichnet, dass das Gewichts-Verhältnis von flüssigem Silikonharz von (I) und Hydroxyl-endblokkiertem Polydimethylsiloxan von (II) zu Polyvinylalkohol von (III) einen Wert von etwa 1 oder kleiner aufweist.

5. Zusammensetzung nach Anspruch 4, dadurch gekennzeichnet, dass das Gewichts-Verhältnis von flüssigem Silikonharz von (II) zu Hydroxyl-endblokkiertem Polydimethylsiloxan von (II) einen Wert von etwa 20/80 bis etwa 10/90 aufweist.

6. Zusammensetzung, erhalten durch Mischen einer die Härtungsgeschwindigkeit erhöhenden Menge eines Härtungskatalysators mit der Zusammensetzung nach Anspruch 5.

7. Zusammensetzung nach Anspruch 6, dadurch gekennzeichnet, dass der Härtungskatalysator ein Silanol kondensierender Katalysator ist.

8. Zusammensetzung nach Anspruch 7, dadurch gekennzeichnet, dass der Silanol kondensierende Katalysator eine Zinnverbindung von Dialkyldiacylaten ist.

9. Verfahren zum Beschichten eines Trägermaterials, gekennzeichnet durch

(1) Aufbringen einer im wesentlichen aus

(I) einem flüssigen Silikonharz, hergestellt durch

(A) Bilden einer eine Säurezahl grösser als 0 aufweisenden homogenen Mischung, bestehend im wesentlichen aus

(a) einer Lösung eines harzartigen Siloxancopolymeren, enthaltend an Silicium gebundene Hydroxylgruppen und bestehend im wesentlichen aus $R_3SiO_{1/2}$-Siloxaneinheiten und $SiO_{4/2}$-Siloxaneinheiten, wobei das Zahlenverhältnis der $R_3SiO_{1/2}$-Siloxaneinheiten zu den $SiO_{4/2}$-Siloxaneinheiten einen Wert 0,6/1 bis 0,9/1 aufweist und R eine Methylgruppe bedeutet, in einem organischen Lösungsmittel und

(b) einem flüssigen Organohydrogenpolysiloxan der Formel $R''R'_2SiO(RHSiO)_bSiR'_2R''$, in der R'' Wasserstoff oder R' ist, R' ein einwertiger Kohlenwasserstoffrest ist, R eine Methylgruppe ist und $\underline{b}$ einen Mittelwert von 30 bis 70 hat,

(B) Erwärmen der homogenen Mischung von (A) um im wesentlichen das gesamte organische Lösungsmittel zu entfernen,

(II) einem Hydroxyl-endblockierten Polydimethylsiloxan mit Viskosität von kleiner als 0,1 Pa s bei 25°C,

(III) Polyvinylalkohol, und

(IV) Wasser in mindestens ausreichender Menge, um die Zusammensetzung homogen zu machen, wobei das Gewichtsverhältnis der Menge des Bestandteils (I) zur Menge des Bestandteils (II) einen Wert von 5/95 bis 95/5 aufweist und das Gewichtsverhältnis der Gesamtmenge der Komponenten (I) und (II) zur Menge der Komponente (III) einen Wert von 1/9 bis 9/1 aufweist und gegebenenfalls

(V) einer zum Erhöhen der Härtungsgeschwindigkeit der Beschichtung ausreichenden Menge eines Härtungskatalysators, bestehenden Zusammensetzung auf das Trägermaterial und

(2) Verdampfen des Wassers aus der aufgebrachten Zusammensetzung.

10. Verfahren nach Anspruch 9, dadurch gekennzeichnet, dass man das Verdampfen bei einer erhöhten Temperatur ausführt.

## Revendications

1. Une composition d'apprêt dorsal de bande, caractérisée par le fait qu'elle contient un mélange homogène de

(I) une résine de silicone liquide préparée

(A) en formant un mélange homogène dont l'indice d'acide est supérieur à zéro et qui est essentiellement constitué de

(a) une solution dans un solvant organique d'un siloxane copolymère résineux contenant des radicaux hydroxyle liés au silicium et composé essentiellement de motifs siloxanes $R_3SiO_{1/2}$ et de motifs siloxanes $SiO_{4/2}$ dans lequel le rapport du nombre desdits motifs siloxanes $R_3SiO_{1/2}$ au nombre desdits motifs siloxanes $SiO_{4/2}$ a une valeur de 0,6/1 à 0,9/1 et chaque R représente un radical méthyle, et de

(b) un organohydrogénopolysiloxane liquide répondant à la formule $R''R'_2SiO(RHSiO)_bSiR'_2R''$ dans laquelle R'' représente H ou R', R' représente un radical hydrocarboné monovalent, R représente un radical méthyle et la valeur moyenne de $\underline{b}$ est de 30 à 70,

(B) en chauffant le mélange homogène de (A) pour en éliminer sensiblement tout le solvant organique, et consistant de plus en

(II) un polydiméthylsiloxane bloqué à ses extrémités par des groupes hydroxyle ayant une viscosité inférieure à 0,1 pascal-seconde à 25°C,

(III) alcool polyvinylique, et

(IV) eau en une quantité au moins suffisante pour rendre la composition homogène; le rapport pondéral de la quantité de composant (I) à la quantité de composant (II) ayant une valeur de 5/95 à 95/5 et le rapport pondéral de la somme des quantités de composant (I) et de composant (II) à la quantité de composant (III) ayant une valeur de 1/9 à 9/1.

2. Une composition selon la revendication 1, dans laquelle l'organohydrogénopolysiloxane liquide (b) répond à la formule $(CH_3)_3SiO[(CH_3)(H)SiO]_bSi(CH_3)_3$ où la valeur moyenne de $\underline{b}$ est de 30 à 70 et le rapport pondéral du siloxane copolymère résineux à l'organohydrogénopolysiloxane liquide a une valeur de 40/60 à 60/40.

3. Une composition selon la revendication 2, dans laquelle l'alcool polyvinylique (III) est partiellement hydrolysé et présente une viscosité, à 4 pour cent en poids dans l'eau, d'environ 5 millipascals-secondes à 25°C.

4. Une composition selon la revendication 3, dans laquelle le rapport pondéral de la somme de la résine de silicone liquide (I) et du polydiméthylsiloxane bloqué à ses extrémités par des groupes hydroxyle (II) à l'alcool polyvinylique (III) a une valeur d'environ 1 ou moins.

5. Une composition selon la revendication 4, dans laquelle le rapport pondéral de la résine de silicone liquide (I) au polydiméthylsiloxane bloqué à ses extrémités par des groupes hydroxyle (II) a une valeur d'environ 20/80 à environ 10/90.

6. Une composition obtenue en mélangeant une quantité apte à augmenter la vitesse de durcissement d'un catalyseur de durcissement avec la composition de la revendication 5.

7. Une composition selon la revendication 6, dans laquelle le catalyseur de durcissement est un catalyseur de condensation de silanols.

8. Une composition selon la revendication 7, dans laquelle le catalyseur de condensation de silanols est un diacylate de dialkylétain.

9. Un procédé pour revêtir un substrat, ledit procédé consistant

(1) à appliquer audit substrat une composition consistant essentiellement en

(I) une résine de silicone liquide préparée

(A) en formant un mélange homogène dont l'indice d'acide est supérieur à zéro et qui est essentiellement constitué de

(a) une solution dans un solvant organique d'un siloxane copolymère résineux contenant des radicaux hydroxyle liés au silicium et composé essentiellement de motifs siloxanes $R_3SiO_{1/2}$ et de motifs siloxanes $SiO_{4/2}$ dans lequel le rapport du nombre desdits motifs siloxanes $R_3SiO_{1/2}$ au nombre desdits motifs siloxanes $SiO_{4/2}$ a une valeur de 0,6/1 à 0,9/1 et chaque R représente un radical méthyle, et de

(b) un organohydrogénopolysiloxane liquide répondant à la formule $R''R'_2SiO(RHSiO)_bSiR'_2R''$

dans laquelle R'' représente H ou R', R' représente un radical hydrocarboné monovalent, R représente un radical méthyle et la valeur moyenne de $\underline{b}$ est de 30 à 70, et

(B) en chauffant le mélange homogène de (A) pour en éliminer sensiblement tout ledit solvant organique,

(II) un polydiméthylsiloxane bloqué à ses extrémités par des groupes hydroxyle ayant une viscosité inférieure à 0,1 pascal-seconde à 25°C,

(III) alcool polyvinylique,

(IV) eau en une quantité au moins suffisante pour rendre la composition homogène; le rapport pondéral de la quantité de composant (I) à la quantité de composant (II) ayant une valeur de 5/95 à 95/5 et le rapport pondéral de la somme des quantités de composant (I) et de composant (II) à la quantité de composant (III) ayant une valeur de 1/9 à 9/1, et éventuellement,

(V) un catalyseur de durcissement en quantité suffisante pour augmenter la vitesse de durcissement du revêtement, et

(2) à faire évaporer l'eau de la composition appliquée.

10. Un procédé selon la revendication 9, dans lequel l'évaporation est exécutée à une température élevée.